# EUROPEAN PATENT APPLICATION

(11) **EP 3 736 711 A1**
(43) Date of publication of application: **11.11.2020**
(21) Application number: 18898310.0
(22) Date of filing: 26.12.2018
(51) Int. Cl.: G06F 17/18

(54) **VISUAL INTERPRETATION METHOD AND DEVICE FOR LOGISTIC REGRESSION MODEL**

(30) Priority: 03.01.2018 CN 201810007250
(71) Applicant: The Fourth Paradigm (Beijing) Tech Co Ltd, Beijing 100085 (CN)
(72) Inventor: DAI, Wenyuan, Beijing 100085 (CN); CHEN, Yuqiang, Beijing 100085 (CN); YANG, Qiang, Beijing 100085 (CN); FANG, Rong, Beijing 100085 (CN); YANG, Huibin, Beijing 100085 (CN); SHI, Guangchuan, Beijing 100085 (CN); ZHOU, Zhenhua, Beijing 100085 (CN)
(74) Representative: Müller Hoffmann & Partner
(86) International application number: PCT/CN2018/123909
(87) International publication number: WO 2019/134569

(57) **Abstract**

A visual interpretation method and a device for a logistic regression model, relating to the computer technology field. The method comprises: receiving an interpretation request for a logistic regression model (S11); obtaining, according to the interpretation request, model parameters of the logistic regression model, the model parameters comprising each feature in the logistic regression model and a weight value of each feature(S12); aggregating each feature in the obtained model parameters according to a feature name(S13); obtaining feature statistics for each feature name to obtain feature statistics information for each feature name, wherein the feature statistics information indicates distribution information of weight values of each feature under the same feature name and/or dimension information of each feature under the same feature name(S14); and displaying the feature name and the corresponding feature statistics information using a graphical interface(S15).

## Description

This application is based on and claims priority of Chinese Patent Application No.201810007250.6, filed on January 03, 2018, in State Intellectual Property Office, the disclosure of which is herein incorporated by reference in its entirety.

### TECHNICAL FIELD

The disclosure relates to a computer technology field, and in particular, to a method and device of visual interpretation for a logistic regression model.

### BACKGROUND ART

With the development of big data and artificial intelligence, machine learning technology has been more and more widely used. In the machine learning, a model can be trained through a large amount of historical sample data, so that the trained model can output prediction results for new sample data. For example, the model may be a logistic regression model based on a logistic regression algorithm.

In the prior art, some indicators are often provided to evaluate the prediction effect of a trained logistic regression model, such as AUC (Area Under Curve), accuracy, precision and the like. However, the details of the model cannot be known and the model lacks interpretability, which is not conducive to a user understanding of the model.

For the logistic regression model, the current common interpretation scheme is a scorecard. In the scorecard, all the features (for example, workers, technicians, waiters, administrators, etc.) under each feature name (for example, occupation) and their corresponding weight values are displayed in the form of a table or card. But in this way, when the feature dimension is high, the table or card may be very large, which is not conducive to the user to view. In particular, when the feature dimension reaches ten million dimensions, it is unlikely to be directly output to the user in this way. The model is interpreted by the scorecard method, although the details are fully exposed, it is difficult for the user to grasp the model as a whole, and the user cannot intuitively and quickly draw from the scorecard which feature names have a high degree of discrimination.

In addition, although the user can perform some statistical analysis on the output parameters of the logistic regression model, this analysis can be completed only when one acquires proficiency in the machine learning technology and related knowledge accumulation, and this analysis is biased towards experimental research. For the model interpretation, there is no systematic display scheme.

The above information is presented as background information only to assist with an understanding of the disclosure. No determination has been made, and no assertion is made, as to whether any of the above might be applicable as prior art with regard to the disclosure.

### SUMMARY

In view of this, embodiments of the disclosure provide a method and device of visual interpretation for a logistic regression, which can help users intuitively and quickly understand the logistic regression model.

In the first aspect, an embodiment of the disclosure provides a method of visual interpretation for a logistic regression model, including: receiving an interpretation request for the logistic regression model; acquiring model parameters of the logistic regression model according to the interpretation request, the model parameters including respective features in the logistic regression model and weight values of the respective features; aggregating the respective features in the acquired model parameters by feature names to which the respective features belong; performing feature statistics for each feature name to obtain feature statistical information of respective feature names, wherein the feature statistical information indicates distribution information of weight values of respective features under a same feature name and/or dimension information of the respective features under the same feature name; and displaying the respective feature names and the corresponding feature statistical information through a graphical interface.

In a second aspect, an embodiment of the disclosure further provides a device of visual interpretation for a logistic regression model, including: a receiving unit configured to receive an interpretation request for the logistic regression model; an acquiring unit configured to acquire model parameters of the logistic regression model according to the interpretation request, the model parameters including respective features in the logistic regression model and weight values of the respective features; an aggregating unit configured to aggregate the respective features in the acquired model parameters by feature names to which the respective features belong; a statistical unit configured to perform feature statistics for each feature name to obtain feature statistical information of respective feature names, wherein the feature statistical information indicates distribution information of weight values of respective features under a same feature name and/or dimension information of the respective features under the same feature name; a displaying unit configured to display the respective feature names and the corresponding feature statistical information through a graphical interface.

In a third aspect, an embodiment of the disclosure provides an electronic apparatus, the electronic apparatus includes: a housing, a processor, a memory, a circuit board, and a power supply circuit, wherein the circuit board is disposed inside the space surrounded by the housing, the processor and the memory are provided on the circuit board; the power supply circuit is used to supply power to respective circuits or devices of the above-mentioned electronic apparatus; the memory is used to store executable program codes; the processor runs programs corresponding to the executable program codes by reading the executable program codes stored in the memory, and is used to perform any of the methods of visual interpretation for the logistic regression model according to the embodiments of the disclosure.

In a fourth aspect, an embodiment of the disclosure further provides a computer-readable storage medium storing instructions, where the computer-readable storage medium stores one or more programs, the one or more instructions may be executed by one or more processor to implement any of the methods of visual interpretation for the logistic regression model according to the embodiments of the disclosure.

The methods and devices of visual interpretation for the logistic regression model according to the embodiments of the disclosure can effectively display the feature statistical information of the feature names in the logistic regression model in the graphical interface, thereby helping the users to intuitively and quickly understand the impact of features on the model prediction, to better understand the logistic regression model.

### BRIEF DESCRIPTION OF THE DRAWINGS

In order to more clearly illustrate the embodiments of the disclosure or the technical solutions in the prior art, hereinafter, drawings required in the description of the embodiments or the prior art will be briefly introduced. Obviously, the drawings in the following description are only some embodiments of the disclosure. For those ordinary skilled in the art, other drawings may be obtained based on these drawings without creative efforts.
FIG. 1 is a flowchart of a method of visual interpretation for a logistic regression model according to an embodiment of the disclosure;
FIG. 2 is a schematic diagram showing summary information of feature names and feature statistical information according to an embodiment of the disclosure;
FIG. 3 is a schematic diagram showing detailed information about a feature name in the schematic diagram showing the summary information in FIG. 2;
FIG. 4 is a schematic structural diagram of a device of visual interpretation for a logistic regression model according to an embodiment of the disclosure;
FIG. 5 is a schematic structural diagram of an electronic apparatus according to an embodiment of the disclosure.

### DETAILED DESCRIPTION

Thereafter, the embodiments of the disclosure are described in detail with reference to the accompanying drawings. It should be noted here that "and/or" and "at least one of' appearing in the disclosure indicates to include parallel situations, thus "and/or" may also be expressed as "at least one of'. For example, "including A and/or B" or "including at least one of A and B" means the following three parallel situations: (1) including A; (2) including B; (3) including A and B. For another example, "performing step one and/or step two" or "performing at least one of step one and step two" indicates the following three parallel situations: (1) performing step one; (2) performing step two; (3) performing step one and step two.

It should be clear that the described embodiments are only a part of the embodiments of the disclosure, rather than all the embodiments. Based on the embodiments in the disclosure, all other embodiments obtained by those ordinary skilled in the art without creative efforts fall within the protection scope of the disclosure.

In the first aspect, an embodiment of the disclosure provides a method of visual interpretation for a logistic regression model, which can effectively display feature statistical information of feature names in the logistic regression model in a graphical interface, thereby helping users to intuitively and quickly understand the impact of features on the model prediction, to better understand the logistic regression model.

The method of visual interpretation for the logistic regression model according to the embodiment of the disclosure may be implemented by software such as a machine learning platform. To this end, the model may be visually interpreted at the same time as the model is trained, that is, the visual interpretation of the model is automatically triggered after the model training is completed. Or, any model that has been trained in advance may also be visually interpreted. As an example, a series of processes may be performed in a back-end server according to a user's operation in a front-end browser, so that the model may be visually interpreted according to the user's instructions. As an example, the user may input a series of configurations about interpretable methods in the front-end browser so that the back-end server automatically operates according to the configurations. The embodiments of the disclosure do not limit this.

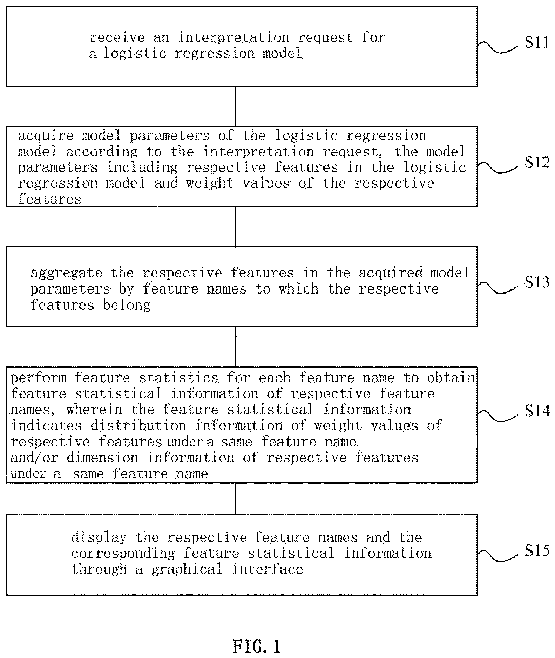

FIG. 1 is a flowchart of a method of visual interpretation for a logistic regression model according to an embodiment of the disclosure. As shown in FIG. 1, the method of visual interpretation for the logistic regression model according to this embodiment may include:
S 11, receiving an interpretation request for the logistic regression model.

In this step, whether it is to automatically trigger visual interpretation of a new logistic regression model while the model is trained, or to perform visual interpretation of a logistic regression model that has been trained in advance, an interpretation request for the logistic regression model will be first received. Here, as an example, the interpretation request may be a manual instruction from a user, or a request that is automatically triggered after the model training is completed, and so on.

S12, acquiring model parameters of the logistic regression model according to the interpretation request, the model parameters including respective features in the logistic regression model and weight values of the respective features.

In this step, the model parameters of the logistic regression model to be interpreted may be acquired according to the received interpretation request. Those skilled in the art should know that the logistic regression model may be regarded as a series of features and corresponding weights thereof. Accordingly, the model parameters may include the respective features of the logistic regression model and the corresponding weight values of the respective features in the model.

As an example, during a training process of a machine learning model, a feature may generally be expressed as a value after hash transformation. Correspondingly, the feature original data in the system may further include a mapping relationship between the original value of the feature before the hash transformation and the hash value of the feature after the hash transformation. For this, in step S12, the original value of the feature may be obtained according to the feature original data, and the weight values of the respective features may be further obtained.

S13, aggregating the respective features in the acquired model parameters by feature names to which the respective features belong.

Alternatively, a feature name may correspond to the result obtained by a field or fields of an original data table after feature engineering, which is intended to describe characteristic of training samples in a certain aspect. The features of the machine learning samples are divided into discrete features and continuous features according to feature processing methods. For the discrete features, each feature name corresponds to a set of features, and each feature indicates one value of a feature name to which it belongs, and corresponds to a weight value. For the continuous features, there is only one feature and a corresponding weight thereof under a feature name, and the value of this feature is continuously changed. For convenience of description, the following mainly uses the discrete features processing as an example for description.

Due to the huge feature scale of the logistic regression model (for example, often reaching tens of millions of feature dimensions), in order to more intuitively show the different impacts of different features on the model prediction results, in this step, all features in the model parameters may be respectively aggregated according to the feature names to which they belong. Further, the exemplary embodiments of the disclosure aim to show the degree of difference between weight values of features under a same feature name, and reflect the classification effect of the corresponding feature name by the degree of the difference.

For example, in one embodiment of the disclosure, the model parameters of the logistic regression model may include features: occupation is a blue-collar worker, occupation is a technician, occupation is a servicer, occupation is a retiree, and occupation is a manager, these features may be aggregated under the corresponding feature name "occupation". For another example, the model parameters of the logistic regression model may include features: age is 20-30 years old, age is 30-40 years old, age is 40-50 years old, age is 50-60 years old, age is 60 years old or older, etc., these features may be aggregated under the corresponding feature name "age".

S14, performing feature statistics for each feature name to obtain feature statistical information of respective feature names, wherein the feature statistical information indicates distribution information of weight values of respective features under a same feature name and/or dimension information of the respective features under the same feature name.

In this step, features included under each feature name may be performed statistics to obtain the feature statistical information of the respective feature names of the logistic regression model. Wherein, the distribution information of the weight values of the respective features under the same feature name may indicate how the weight values (all weight values or non-zero weight values) of the respective features under the same feature name are distributed, for example, in which ranges the weight values are mainly distributed, whether the distribution of the weight values of the respective features is relatively dispersed or relatively concentrated, where key value points are located, whether the dispersion is uniform, etc. The dimension information of the respective features under the same feature name may indicate dimension information of all features under each feature name, or dimension information of features of a certain kind (for example, valid features whose weight values are not zero) under each feature name. The dimension information may allow the user to understand the valid feature dimensions under the feature names, thereby helping the user understand the online performance of the model.

S15, displaying the respective feature names and the corresponding feature statistical information through a graphical interface.

In this step, the respective feature names and the feature statistical information thereof may be displayed via a graphical interface. Here, as an example, the respective feature names and the related feature statistical information thereof may be displayed via charts, graphics, characters, and the like. In addition, a user may also perform interactive operations through widgets provided on the graphical interface, and accordingly, the displayed content may be further adjusted according to the user's interactive operations.

The method of visual interpretation for the logistic regression model according to the embodiments of the disclosure may aggregate the model parameters in the logistic regression model by the feature names to which the respective features belong, perform feature statistics for each feature name to obtain the feature statistical information of the respective feature names, and display the respective feature names and the corresponding feature statistical information through the graphical interface. Since the feature statistical information indicates the distribution information of the weight values of the respective features under the same feature name and/or the dimension information of the respective features under the same feature name, it may help the user to intuitively and quickly understand the impact of the features on the model prediction, to better understand the logistic regression model.

Alternatively, in step S14, the dimension information of the respective features may indicate one or more of a ratio of a absolute number of respective features with non-zero weight values under the same feature name to a total number of features under the same feature name, a number of dimensions of all features under the same feature name or a ratio of the number of the dimensions to a total number of dimensions of features of the logistic regression model, and a number of dimensions of the respective features with non-zero weight values under the same feature name or a ratio of the number of the dimensions to a total number of dimensions of all features with non-zero weight values of the logistic regression model.

Wherein, the features with non-zero weight values are also called as valid features. Correspondingly, the ratio of the absolute number of the respective features with non-zero weight values under the same feature name to the total number of the features under the same feature name is also called as a valid feature ratio. For example, if 10 features are include under a feature name, 3 of which have weight values of 0, and the remaining 7 features have non-zero weight values, it can be shown that the valid feature ratio of the feature name is 70%.

The number of the dimensions of the all features under the same feature name or the ratio of the number of the dimensions to the total number of the dimensions of the features of the logistic regression model represents that how many features are included under one feature name or how many ratios of these features to the total number of the dimensions of all the features included in the logistic regression model. For example, if a total number of dimensions of all features under all feature names of one logistic regression model is 100, and a number of dimensions of all features under one feature name A is 20, it can be shown that the number of the dimensions of the all features under the feature name A is 20, or it can be shown that the ratio of the number of the dimensions to the total number of the features of the logistic regression model is 20%.

The number of the dimensions of the respective features with non-zero weight values under the same feature name or the ratio of the number of the dimensions to the total number of the dimensions of the all features with non-zero weight values of the logistic regression model represents that how many features with non-zero weight values are included under one feature name or how many ratios of these features with non-zero weight values to the total number of the dimensions of the all features with non-zero weight values included in the logistic regression model. For example, if a total number of dimensions of all features under all feature names of one logistic regression model is 100, a total number of dimensions of features with non-zero weight values is 80, a number of dimensions of features with non-zero weight values under one feature name B is 10, it can be shown that the number of the dimensions of the respective features with non-zero weight values under the feature name B is 10, or it can be shown that the ratio of the number of the dimensions to the total number of the dimensions of all the features with non-zero weight values of the logistic regression model is 10/80^{∗}100%=12.5%.

After obtaining the feature names and the corresponding feature statistical information thereof, in one embodiment of the disclosure, the respective feature names and the corresponding feature statistical information may be displayed in the form of a graph, so that the respective feature names and the feature statistical information thereof are presented to the user intuitively according to a certain arrangement, thus even if the dimension of the features is very high, the user's understanding of the model is still not weaken. Moreover, as an example, by displaying the statistical information of all feature names in one graph, it also allows the user to have a more intuitive grasp of the whole model.

Alternatively, the displaying the respective feature names and the corresponding feature statistical information in the form of the graph may include:
representing distribution information of non-zero weight values and/or all weight values of the respective features under the same feature name respectively by using box plots, wherein the box plots includes at least one of a minimum value, a first quartile, a median, a third quartile, and a maximum value; displaying the respective feature names and the corresponding box plots and dimension information in the graph.

Thereafter, the drawing of the box plots is first briefly described.

Alternatively, in one embodiment of the disclosure, all weight values or non-zero weight values of respective features under a same feature name may be sorted in an ascending or descending order according to sizes of the weight values; a box plot of the feature name is drawn with the sorted first weight value, last weight value and/or weight values for preset quantiles as key points, wherein the preset quantiles may be specified as needed. For example, in one embodiment of the disclosure, the preset quantiles may include a first quartile, a median, and a third quartile, when drawing a box plot, non-zero weight values under each feature name may be sorted from small to large, and a minimum value, a 1/4 quantile, median, a 3/4 quantile, and a maximum value of the weight values are counted, and the box plot is drawn based on these five points. In other embodiments of the disclosure, these quantiles may also be replaced with other quantiles, and a number of the preset quantiles may be further added, for example, 10% and 90% quantiles may be added.

The box plot shows that the distribution of the weight values of the features under the same feature name. To facilitate the observation of the distribution state, alternatively, a reference line with weight values of 0 may be marked between the box plots of the respective feature names, and whether the feature name is biased towards a positive or negative impact on the model prediction is determined by observing the offset state of each box plot with respect to the 0 reference line.

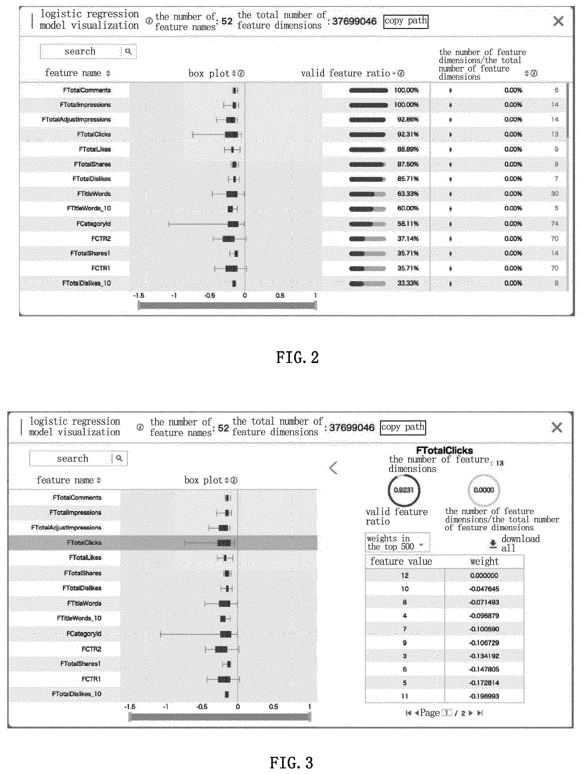

After drawing the box plots of the feature names, the respective feature names, the corresponding box plots and dimensional information may be displayed in the graph. For example, it may be displayed in an order of the feature names, the box plots and the dimensional information. In one embodiment of the disclosure, the graph displaying the respective feature names and the corresponding box plots and dimensional information may be as shown in FIG. 2.

As may be seen from the statistics figures at the top of FIG. 2, there are 52 feature names in this logistic regression model, and a total number of dimensions of all features included under all the feature names is 37699046. These two statistic values may make the user have an overall grasp on the size of the model. The table shown in FIG. 2 is divided into four columns, where the first column from the left represents the feature names, the second column represents box plots about non-zero weight distribution, and the third column represents valid feature ratios, where the valid feature ratio is a ratio of valid features under a same feature name, the fourth column represents ratios of a number of feature dimensions to a total number of feature dimensions (where the number of the feature dimensions here may be for all features or non-zero features, and the numbers at the right of the percentage data may indicate the absolute value of the feature dimensions), it may be seen that the second column shows the distribution information of the features, and the third column and the fourth column respectively show the dimension information of the features from different aspects. In order to facilitate the user to view and compare the box plots, according to an exemplary embodiment of the disclosure, one side of the graph may be provided with a zoom bar about the box plots, for example, the zoom bar marked with weight value scale may be set below the icons, so that when box plots of some feature names are too concentrated, the box plots may be enlarged and displayed.

Take the penultimate feature name FCTR1 as an example. In the box plot, the zoom bar below the box plot may indicate a weight value range (for example, -1.5 to 1), and correspond to the coordinate indication. In the box plot corresponding to FCTR1, the leftmost short vertical line corresponds to the minimum weight value, the rightmost short vertical line corresponds to the maximum weight value, the middle vertical line corresponds to the median, the left boundary of the box corresponds to the 1/4 quantile, and the right boundary of the box corresponds to the 3/4 quantile, and the longitudinal axis aligned with the coordinate value 0 is the reference line with weights of 0.

From the box plot of FIG. 2, it may be understood the approximate distribution state of the features under the feature name FCTR1, and it can be seen from the offset state of the box plot of FCTR1 with respect to the 0 reference line that most of the features of FCTR1 are biased towards a negative impact on the model prediction, only a small part of the features are biased towards a positive impact on the model prediction.

In the dimension information shown in the third column of FIG. 2, the specific values and the histograms of the valid feature ratios are listed respectively. Specifically, a valid feature ratio may be used to describe the density of a feature name. The lower the valid feature ratio is, the sparser the feature name is, and the higher the valid feature ratio is, the denser the feature name is. If a feature name is too sparse, it may cause under-fitting of the model, and if the feature name is too dense, it may cause over-fitting, and increase the size of the model, thereby affecting resource consumption for real-time prediction. Since the valid feature ratio is affected by the coefficients of the regular terms of the loss function in logistic regression, the user can more specifically understand the impact of the coefficients of the regular terms of the loss function on the model by understanding the valid feature ratio. It can be seen from FIG. 2 that the valid feature ratio in the feature name FCTR1 is 35.71%.

The dimension information shown in the rightmost column of FIG. 2 lists a number of dimensions of features under each feature name and a ratio of the number of the dimensions to a total number of feature dimensions. For example, the number of the dimensions of the features under the feature name FCTR1 is 70, and the total number of the feature dimensions is 37699046, the ratio is approximately 0. This information may help the user understand the data distribution to a certain degree.

By combining the statistical information such as the box plots with non-zero weight distribution of each feature name, the valid feature ratios, and the ratios of feature dimensions, it may help the user adjust the parameters and optimize the model. For example, when a box plot of weight distribution is too concentrated, a valid feature ratio is too low, and a number of feature dimensions of a feature name is very high, if the computing resources are limited, the feature may be discard and the feature sample size is reduced, to save the computing resources and time of training the model.

Alternatively, when displaying the respective feature names, the corresponding box plots and dimension information in the graph, the respective feature names and the corresponding feature statistical information may be sorted and displayed according to different indicators. These indicators themselves may be content displayed, or may not be displayed explicitly, or may be displayed during the interaction with the user.

For example, in one embodiment of the disclosure, the respective feature names and the corresponding box plots and dimension information may be arranged in the graph based on an ascending or descending order of a variance, a standard deviation or an average deviation of the weight values of the respective features under the same feature name, wherein the larger the variance is, the stronger the ability of the corresponding feature name to distinguish samples is, and the smaller the variance is, the worse the ability of the feature name to distinguish samples is. In this example, the variance, the standard deviation, or the average deviation itself may or may not be displayed in the graphical interface. It is also possible to arrange the respective feature names and the corresponding box plots and dimension information in the graph based on the generation order of the respective feature names, that is, to display based on the original order in which the feature names are generated during feature engineering. Or, the respective feature names and the corresponding box plots and dimension information may be arranged in the graph based on an ascending or descending order of a ratio of the absolute number of the respective features with non-zero weight values under the same feature name to the total number of the features under the same feature name. It is also possible to arrange the respective feature names and the corresponding box plots and dimension information in the graph based on an ascending or descending order of the number of the dimensions of the all features under the same feature name or the ratio of the number of the dimensions to the total number of the dimensions of the features of the logistic regression model, or the respective feature names and the corresponding box plots and dimension information in the graph may be arranged based on an ascending or descending order of the number of the dimensions of the respective features with non-zero weight values under the same feature name or the ratio of the number of the dimensions to the total number of the dimensions of the all features with non-zero weight values of the logistic regression model.

It should be noted that although FIG. 2 is taken as an example to illustrate the display of the feature names and the corresponding feature statistical information, the disclosure is not limited to this. In other embodiments of the disclosure, the displayed feature statistical information may also only include the distribution information or the dimensional information. When displaying related information, it may also be displayed in other ways or points of view. The embodiments of the disclosure do not limit this.

According to an exemplary embodiment of the disclosure, in the case that the logistic regression model is interpreted visually based on the feature statistical information of the feature names, more details information related to the logistic regression model may be further displayed.

For example, in one embodiment of the disclosure, the method of visual interpretation for the logistic regression model according to the embodiments of the disclosure may further include: detecting a hovering operation of a mouse on a box plot of any one of the respective feature names; and popping up a feature prompt box about the any one feature name when the hovering operation is detected, wherein the feature prompt box displays prompt features under the any one feature name and weight values thereof and/or statistical values of weight values of respective features under the any one feature name, wherein the prompt features include features with at least one of weight values of a minimum value, a first quartile, a median, a third quartile, and a maximum value; the statistical value of the weight values includes at least one of a mean, a variance, a standard deviation, and a mean deviation.

As an example, the feature prompt box may be displayed around the box plot that the hovering operation is performed.

Through the above methods, it may not only help the user to view the key weight values of the feature names more accurately, but also enable the user to understand the specific features corresponding to the weight values, thereby helping the user to verify the business intuition or extract business knowledge therefrom, which is convenient for the user to further understand the logistic regression model.

In another embodiment of the disclosure, the method of visual interpretation for the logistic regression model according to the embodiment of the disclosure may further include: receiving a details viewing instruction for any of the respective feature names, and displaying at least a part of features under the any feature name and weight values thereof according to the received details viewing instruction.

Specifically, when the user wants to view some specific features of one feature name in the respective feature names and the corresponding feature statistical information shown in FIG. 2, the user can use the details viewing instruction. The specific form of the details viewing instruction may be various, for example, a feature name desired to view details may be selected by clicking the corresponding feature name with a mouse or hovering over the feature name. After receiving the details viewing instruction, some or all features under the feature name and their weight values and other details are displayed by switching windows or popping up windows.

For example, when the details viewing instruction indicates that the fourth feature name "FTotalClicks" in FIG. 2 needs to be viewed, some or all features under the feature name "FTotalClicks" may be displayed, as shown in FIG. 3. Alternatively, the specific number of features displayed may be determined according to the number of features or user needs. For example, when the number of features under the feature name is small, all of these features may be displayed, and when the number of the features under the feature name is large, only a part of the features may be selected for display. In this embodiment, considering that the dimensions of the features under some feature names are very high, in order to reflect the priority and efficiency of information display, a number of features with weight values ranked at the front/last may be displayed, so that the user may subtly understand the contribution of the features to the model prediction. For example, the user may manually select features whose weight values are in the top 500 or in the last 500.

As shown in FIG. 3, the left half of FIG. 3 shows the respective feature names and the corresponding box plots, and the right half shows the detailed information about the features under the selected feature name "FTotalClicks". As can be seen from FIG. 3, only 13 features are included under "FTotalClicks", since the user chose to display features whose weight values are in the top 500, all 13 features are displayed in the descending order of the weight values, wherein 10 features are shown on the first page (i.e., the current page), and the remaining 3 features are shown on the second page (not shown).

Furthermore, in order to facilitate the user to quickly obtain the information of interest, in one embodiment of the disclosure, a search function is further provided when graphically displaying the respective feature names and their corresponding feature statistical information. Alternatively, the search function may include searching for feature names and/or searching for features.

For the search of feature names, the method of visual interpretation for the logistic regression model according to an embodiment of the disclosure may include: receiving a feature name search instruction; searching for a target feature name among the feature names according to the feature name search instruction; and displaying the searched target feature name and the corresponding feature statistical information.

During specific implementation, the user can enter a target feature name to be found in a search box, the system may search for the target feature name among all the feature names of the logistic regression model. When the target feature name is searched, the target feature name and the corresponding various feature statistical information (such as the box plot and dimension information and the like of features) are displayed in the form of a graph. Furthermore, the feature details, key features, and feature weight value statistical indicators (for example, a variance, standard deviation, average deviation, etc.) of the target feature name may be displayed.

Similarly, in order to facilitate the user to find a feature of interest among many features included under a feature name, the method of visual interpretation for the logistic regression model according to an embodiment of the disclosure may further include: receiving a feature search instruction; searching for a target feature among the features according to the feature search instruction; and displaying the searched target feature and the corresponding weight value.

It should be noted that the search strategy of the above feature name search and feature search may use fuzzy search or precise search methods, which may be performed on the overall situation display page, detailed information display page, or any other display page, and not limited by the content displayed on the current page. For example, when displaying the overall situation of feature names and feature statistical information thereof, the user can not only search for a feature name of interest, but also directly search for a feature of interest.

In a second aspect, an embodiment of the disclosure further provides a device of visual interpretation for a logistic regression model, which can display respective feature names in the logistic regression model and feature statistical information thereof in a graphical interface, thereby helping the user to intuitively and quickly understand the impact of features on the model prediction, to better understand the logistic regression model.

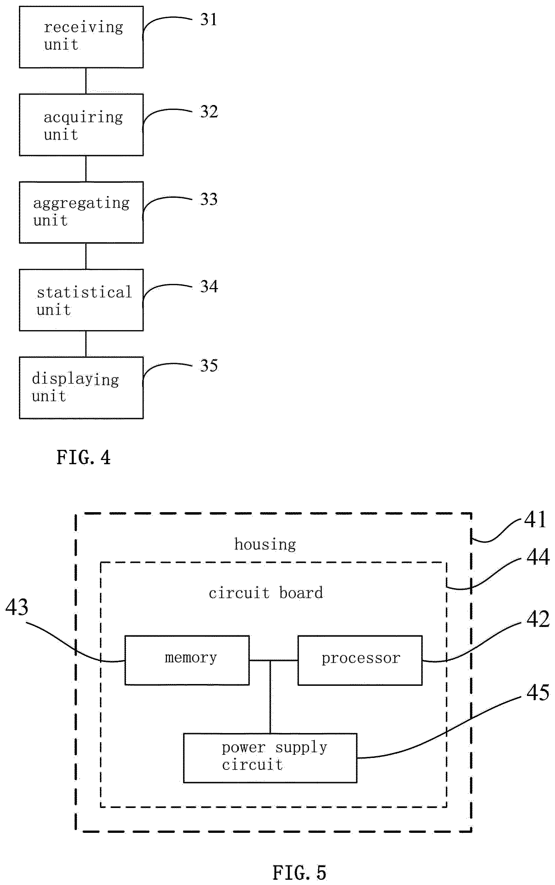

As shown in FIG. 4, the device of visual interpretation for the logistic regression model according to an embodiment of the disclosure may include: a receiving unit 31 configured to receive an interpretation request for the logistic regression model; an acquiring unit 32 configured to acquire model parameters of the logistic regression model according to the interpretation request, the model parameters including respective features in the logistic regression model and weight values of the respective features; an aggregating unit 33 configured to aggregate the respective features in the acquired model parameters by feature names to which the respective features belong; a statistical unit 34 configured to perform feature statistics for each feature name to obtain feature statistical information of respective feature names, wherein the feature statistical information indicates distribution information of weight values of respective features under a same feature name and/or dimension information of the respective features under the same feature name; a displaying unit 35 configured to display the respective feature names and the corresponding feature statistical information through a graphical interface.

The device of visual interpretation for the logistic regression model according to the embodiment of the disclosure can aggregate the model parameters of the logistic regression model according to the feature names to which the respective features belongs, and perform feature statistics for each feature name to obtain feature statistical information of the respective feature names, and then display the feature names and the corresponding feature statistical information through the graphical interface. Since the feature statistical information indicates the distribution information of the weight values of the respective features under the same feature name and/or the dimension information of the respective features under the same feature name, it can help the user to intuitively and quickly understand the impact of the features on the model prediction, thereby better understanding the logistic regression model. Here, the units constituting the device of visual interpretation may be functional modules or devices that execute corresponding program steps. For example, the device of visual interpretation may be operated through a front-end browser and a back-end server.

In one embodiment of the disclosure, the dimension information indicates at least one of a ratio of a absolute number of respective features with non-zero weight values under the same feature name to the total number of features under the same feature name, a number of dimensions of all features under the same feature name or a ratio of the number of the dimensions to a total number of dimensions of features of the logistic regression model, and a number of dimensions of the respective features with non-zero weight values under the same feature name or a ratio of the number of the dimensions to a total number of dimensions of all features with non-zero weight values of the logistic regression model.

In one embodiment of the disclosure, the displaying unit 35 displays the respective feature names and the corresponding feature statistical information in the form of a graph.

In one embodiment of the disclosure, the displaying unit 35 may include: a box plot drawing module for representing distribution information of non-zero weight values and/or distribution information of all weight values of the respective features under the same feature name respectively by using box plots, wherein the box plots includes at least one of a minimum value, a first quartile, a median, a third quartile, and a maximum value; a display module for displaying the respective feature names and the corresponding box plots and dimension information in the graph.

In one embodiment of the disclosure, the display module may arrange the respective feature names and the corresponding box plots and dimension information in the graph, based on a generation order of the respective feature names; or arrange the respective feature names and the corresponding box plots and dimension information in the graph, based on an ascending or descending order of a variance, a standard deviation or an average deviation of the weight values of the respective features under the same feature name; or arrange the respective feature names and the corresponding box plots and dimension information in the graph, based on an ascending or descending order of the ratio of the absolute number of the respective features with non-zero weight values under the same feature name to the total number of the features under the same feature name; or arrange the respective feature names and the corresponding box plots and dimension information in the graph, based on an ascending or descending order of the number of the dimensions of the all features under the same feature name or a ratio of the number of the dimensions to the total number of the dimensions of the features of the logistic regression model; or arrange the respective feature names and the corresponding box plots and dimension information in the graph, based on an ascending or descending order of the number of the dimensions of the respective features with non-zero weight values under the same feature name or the ratio of the number of the dimensions to the total number of the dimensions of the all features with non-zero weight values of the logistic regression model.

Furthermore, the device of visual interpretation for the logistic regression model according to the embodiment of the disclosure may further include: a detecting unit for detecting a hovering operation of a mouse on a box plot of any one of the respective feature names; a pop-up unit for popping up a feature prompt box about the any one feature name when the hovering operation is detected, wherein the feature prompt box displays prompt features under the any one feature name and weight values thereof and/or a statistical value of weight values of respective features under the any one feature name, wherein the prompt features include features with at least one of weight values of a minimum value, a first quartile, a median, a third quartile, and a maximum value; the statistical value of the weight values includes at least one of a mean, a variance, a standard deviation, and a mean deviation.

In one embodiment of the disclosure, one side of the graph is provided with a zoom bar about the box plots.

Furthermore, the device of visual interpretation for the logistic regression model according to the embodiment of the disclosure may further include: a view instruction receiving unit configured to receive a details viewing instruction unit for any of the respective feature names; a details displaying unit configured to display at least a part of features under the any feature name and weight values thereof according to the received details viewing instruction.

Furthermore, the device of visual interpretation for the logistic regression model according to the embodiment of the disclosure may further include: a search instruction receiving unit configured to receive a feature name search instruction; a search unit configured to search for a target feature name among the feature names according to the feature name search instruction; and a search displaying unit configured to display the searched target feature name and the corresponding feature statistical information.

Furthermore, the device of visual interpretation for the logistic regression model according to the embodiment of the disclosure may further include: a search instruction receiving unit configured to receive a feature search instruction; a search unit configured to search for a target feature among the features according to the feature search instruction; and a search displaying unit configured to display the searched target feature and the corresponding weight value.

The specific operations shown above in conjunction with FIGS. 1 to 3 may be performed by the units in the device of visual interpretation of FIG. 4, respectively, and the details of the specific operations will not be repeated here.

In a third aspect, accordingly, an embodiment of the disclosure provides an electronic apparatus, which can display respective feature names in a logistic regression model and feature statistical information thereof in a graphical interface, thereby helping the user to intuitively and quickly understand the impact of features on the model prediction, to better understand the logistic regression model.

As shown in FIG. 5, the electronic apparatus according to the embodiment of the disclosure may include: a housing 41, a processor 42, a memory 43, a circuit board 44, and a power circuit 45, wherein the circuit board 44 is disposed inside the space enclosed by the housing 41, the processor 42 and the memory 43 are provided on the circuit board 44; the power circuit 45 is used to supply power to each circuit or device of the above electronic apparatus; the memory 43 is used to store executable program code; the processor 42 runs programs corresponding to the executable program code by reading the executable program code stored in the memory 43, and is used to execute the method of visual interpretation for the logistic regression model described in any of the foregoing embodiments.

For the specific execution processes of the above steps by the processor 42 and the steps further executed by the processor 42 through running the executable program code, reference may be made to the description of the foregoing embodiments, and details are not described herein again.

The electronic device exists in various forms and may have a stand-alone or distributed computing structure, which is not limited in this disclosure.

In a fourth aspect, an embodiment of the disclosure further provides a computer-readable storage medium storing instructions, where the computer-readable storage medium stores instructions (or one or more programs), which may be executed by one or more processor to perform the method of visual interpretation for the logistic regression model described in any of the foregoing embodiments, and thus can also achieve the corresponding technical effects, which has been described in detail hereinabove and will not be repeated here.

In a fifth aspect, an embodiment of the disclosure further provides a system including at least one computing device and at least one storage device storing instructions, the instructions, when executed by the at least one computing device, cause the at least one computing device to perform a method of visual interpretation for a logistic regression model, the method including: receiving an interpretation request for the logistic regression model; acquiring model parameters of the logistic regression model according to the interpretation request, the model parameters including respective features in the logistic regression model and weight values of the respective features; aggregating the respective features in the acquired model parameters by feature names to which the respective features belong; performing feature statistics for each feature name to obtain feature statistical information of respective feature names, wherein the feature statistical information indicates distribution information of weight values of respective features under a same feature name, dimension information of the respective features under the same feature name, or both the distribution information of the weight values of the respective features under the same feature name and the dimension information of the respective features under the same feature name; displaying the respective feature names and the corresponding feature statistical information through a graphical interface.

Here, the system may constitute a stand-alone computing environment or a distributed computing environment, which includes at least one computing device and at least one storage device. Here, as an example, the computing device may be a general-purpose or dedicated computer, processor, etc., may be a unit that simply uses software to perform processing, may also be an entity combining software and hardware. That is, the computing device may be implemented as a computer, processor, computing unit (or module), client, host, agent device, server, or the like. In addition, the storage device may be a physical storage apparatus or a logically divided storage unit, which may be operatively coupled with the computing device, or may communicate with each other, for example, through an I/O port, a network connection, or the like.

It should be noted that relational terms such as first and second herein are only used to distinguish one entity or operation from another entity or operation, and do not necessarily require or imply that there is any such actual relationship or order among these entities or operations. Moreover, the terms "include", "including" or any other variant thereof are intended to cover non-exclusive inclusion, so that a process, method, article, or apparatus that includes a series of elements may not only include these elements, but also include other elements that are not explicitly listed in this process, method, article, or apparatus, or also include elements inherent to this process, method, article or apparatus. Without more restrictions, an element defined by an expression "include one..." does not exclude that there are other identical elements in the process, method, article or apparatus that includes the element.

The embodiments in this specification are described in a related manner. The same or similar parts between the embodiments may be referred to each other. Each embodiment focuses on the differences from other embodiments.

In particular, for the device embodiment, since it is basically similar to the method embodiment, the description is relatively simple, and the relevant part may be referred to the description of the method embodiment.

For the convenience of description, the above devices are described by dividing into various units/modules according to their functions. Of course, the functions of each unit/module may be implemented in a same software or multiple software and/or hardware when implementing the disclosure.

Those ordinary skilled in the art may understand that all or part of the processes in the methods of the foregoing embodiments may be completed by instructing relevant hardware through a computer program, and the program may be stored in a computer-readable storage medium, and include the processes of the above method embodiments when the program is executed, wherein the storage medium may be a magnetic disk, an optical disk, a read-only memory (Read-Only Memory, ROM) or a random access memory (Random Access Memory, RAM), etc.

The above are only specific implementations of the disclosure, but the protection scope of the disclosure is not limited to this, any skilled in the art which knows the field well can easily think of changes or replacements within the technical scope disclosed in the disclosure, which all should be covered by the protection scope of the disclosure. Therefore, the protection scope of the disclosure shall be subject to the protection scope of the claims.

## Claims

1. A method of visual interpretation for a logistic regression model performed by at least one computing device, comprising:
receiving an interpretation request for the logistic regression model;
acquiring model parameters of the logistic regression model according to the interpretation request, the model parameters comprising respective features in the logistic regression model and weight values of the respective features;
aggregating the respective features in the acquired model parameters by feature names to which the respective features belong;
performing feature statistics for each feature name to obtain feature statistical information of respective feature names, wherein the feature statistical information indicates distribution information of weight values of respective features under a same feature name, dimension information of the respective features under the same feature name, or both the distribution information of the weight values of the respective features under the same feature name and the dimension information of the respective features under the same feature name;
displaying the respective feature names and the corresponding feature statistical information through a graphical interface.

2. The method according to claim 1, wherein the dimension information indicates at least one of a ratio of a absolute number of respective features with non-zero weight values under the same feature name to a total number of features under the same feature name, a number of dimensions of all features under the same feature name or a ratio of the number of the dimensions to a total number of dimensions of features of the logistic regression model, and a number of dimensions of the respective features with non-zero weight values under the same feature name or a ratio of the number of the dimensions to a total number of dimensions of all features with non-zero weight values of the logistic regression model.

3. The method according to claim 1 or 2, wherein said displaying the respective feature names and the corresponding feature statistical information through the graphical interface comprises:
displaying the respective feature names and the corresponding feature statistical information in a form of a graph.

4. The method according to claim 3, wherein said displaying the respective feature names and the corresponding feature statistical information in the form of the graph comprises:
representing distribution information of non-zero weight values, distribution information of all weight values or both the distribution information of the non-zero weight values and the distribution information of the all weight values of the respective features under the same feature name respectively, by using box plots, wherein the box plots comprise at least one of a minimum value, a first quartile, a median, a third quartile, and a maximum value;
displaying the respective feature names and the corresponding box plots and dimension information in the graph.

5. The method according to claim 4, wherein said displaying the respective feature names and the corresponding box plots and dimension information in the graph comprises:
arranging the respective feature names and the corresponding box plots and dimension information in the graph, based on a generation order of the respective feature names;
or, arranging the respective feature names and the corresponding box plots and dimension information in the graph, based on an ascending or descending order of a variance, a standard deviation or an average deviation of the weight values of the respective features under the same feature name;
or, arranging the respective feature names and the corresponding box plots and dimension information in the graph, based on an ascending or descending order of the ratio of the absolute number of the respective features with non-zero weight values under the same feature name to the total number of the features under the same feature name;
or, arranging the respective feature names and the corresponding box plots and dimension information in the graph, based on an ascending or descending order of the number of the dimensions of the all features under the same feature name or the ratio of the number of the dimensions to the total number of the dimensions of the features of the logistic regression model;
or, arranging the respective feature names and the corresponding box plots and dimension information in the graph, based on an ascending or descending order of the number of the dimensions of the respective features with non-zero weight values under the same feature name or the ratio of the number of the dimensions to the total number of the dimensions of the all features with non-zero weight values of the logistic regression model.

6. The method according to claim 5, further comprising:
detecting a hovering operation of a mouse on a box plot of any one of the respective feature names;
popping up a feature prompt box about the any one feature name when the hovering operation is detected, wherein the feature prompt box displays prompt features under the any one feature name and weight values thereof, a statistical value of weight values of respective features under the any one feature name, or both the prompt features under the any one feature name and the weight values thereof and the statistical value of the weight values of the respective features under the any one feature name,
wherein the prompt features comprise features with at least one of weight values of a minimum value, a first quartile, a median, a third quartile, and a maximum value; the statistical value of the weight values comprises at least one of a mean, a variance, a standard deviation, and a mean deviation.

7. The method according to claim 4, wherein one side of the graph is provided with a zoom bar about the box plots.

8. The method according to any one of claims 3-7, further comprising:
receiving a details viewing instruction for any of the respective feature names;
displaying at least a part of features under the any feature name and weight values thereof according to the received details viewing instruction.

9. The method according to any one of claims 3-7, further comprising:
receiving a feature name search instruction;
searching for a target feature name among the feature names according to the feature name search instruction; and
displaying the searched target feature name and the corresponding feature statistical information.

10. The method according to any one of claims 3-7, further comprising:
receiving a feature search instruction;
searching for a target feature among the features according to the feature search instruction; and
displaying the searched target feature and the corresponding weight value.

11. A system comprising at least one computing device and at least one storage device storing instructions, the instructions, when executed by the at least one computing device, cause the at least one computing device to perform a method of visual interpretation for a logistic regression model, the method comprising:
receiving an interpretation request for the logistic regression model;
acquiring model parameters of the logistic regression model according to the interpretation request, the model parameters comprising respective features in the logistic regression model and weight values of the respective features;
aggregating the respective features in the acquired model parameters by feature names to which the respective features belong;
performing feature statistics for each feature name to obtain feature statistical information of respective feature names, wherein the feature statistical information indicates distribution information of weight values of respective features under a same feature name, dimension information of the respective features under the same feature name, or both the distribution information of the weight values of the respective features under the same feature name and the dimension information of the respective features under the same feature name;
displaying the respective feature names and the corresponding feature statistical information through a graphical interface.

12. The system according to claim 11, wherein the dimension information indicates at least one of a ratio of a absolute number of respective features with non-zero weight values under the same feature name to a total number of features under the same feature name, a number of dimensions of all features under the same feature name or a ratio of the number of the dimensions to a total number of dimensions of features of the logistic regression model, and a number of dimensions of the respective features with non-zero weight values under the same feature name or a ratio of the number of the dimensions to a total number of dimensions of all features with non-zero weight values of the logistic regression model.

13. The system according to claim 11 or 12, wherein said displaying the respective feature names and the corresponding feature statistical information through the graphical interface comprises:
displaying the respective feature names and the corresponding feature statistical information in a form of a graph.

14. The system according to claim 13, wherein said displaying the respective feature names and the corresponding feature statistical information in the form of the graph comprises:
representing distribution information of non-zero weight values, distribution information of all weight values or both the distribution information of the non-zero weight values and the distribution information of the all weight values of the respective features under the same feature name respectively, by using box plots, wherein the box plots comprise at least one of a minimum value, a first quartile, a median, a third quartile, and a maximum value;
displaying the respective feature names and the corresponding box plots and dimension information in the graph.

15. The system according to claim 14, wherein said displaying the respective feature names, the corresponding box plots and dimension information in the graph comprises:
arranging the respective feature names and the corresponding box plots and dimension information in the graph, based on a generation order of the respective feature names;
or, arranging the respective feature names and the corresponding box plots and dimension information in the graph, based on an ascending or descending order of a variance, a standard deviation or an average deviation of the weight values of the respective features under the same feature name;
or, arranging the respective feature names and the corresponding box plots and dimension information in the graph, based on an ascending or descending order of the ratio of the absolute number of the respective features with non-zero weight values under the same feature name to the total number of the features under the same feature name,;
or, arranging the respective feature names and the corresponding box plots and dimension information in the graph, based on an ascending or descending order of the number of the dimensions of the all features under the same feature name or the ratio of the number of the dimensions to the total number of the dimensions of the features of the logistic regression model;
or, arranging the respective feature names and the corresponding box plots and dimension information in the graph, based on an ascending or descending order of the number of the dimensions of the respective features with non-zero weight values under the same feature name or the ratio of the number of the dimensions to the total number of the dimensions of the all features with non-zero weight values of the logistic regression model.

16. The system according to claim 15, wherein the instructions, when executed by the at least one computing device, cause the at least one computing device further to:
detect a hovering operation of a mouse on a box plot of any one of the respective feature names;
pop up a feature prompt box about the any one feature name when the hovering operation is detected, wherein the feature prompt box displays prompt features under the any one feature name and weight values thereof, a statistical value of weight values of respective features under the any one feature name, or both the prompt features under the any one feature name and the weight values thereof and the statistical value of the weight values of the respective features under the any one feature name,
wherein the prompt features comprise features with at least one of weight values of a minimum value, a first quartile, a median, a third quartile, and a maximum value; the statistical value of the weight values comprises at least one of a mean, a variance, a standard deviation, and a mean deviation.

17. The system according to claim 14, wherein one side of the graph is provided with a zoom bar about the box plots.

18. The system according to any one of claims 13-17, the instructions, when executed by the at least one computing device, cause the at least one computing device further to:
receive a details viewing instruction for any of the respective feature names;
display at least a part of features under the any feature name and weight values thereof according to the received details viewing instruction.

19. The system according to any one of claims 13-17, the instructions, when executed by the at least one computing device, cause the at least one computing device further to:
receive a feature name search instruction;
search for a target feature name among the feature names according to the feature name search instruction; and
displaying the searched target feature name and the corresponding feature statistical information.

20. The system according to any one of claims 13-17, the instructions when executed by the at least one computing device, cause the at least one computing device further to:
receive a feature search instruction;
searching for a target feature among the features according to the feature search instruction; and
displaying the searched target feature and the corresponding weight value.

21. A computer-readable storage medium storing instructions, wherein, the instructions, when executed by at least one processor, cause the at least one processor to perform a method of visual interpretation for a logistic regression model according to any one of claims 1 to 10.

22. A device of visual interpretation for a logistic regression model, comprising:
a receiving unit configured to receive an interpretation request for the logistic regression model;
an acquiring unit configured to acquire model parameters of the logistic regression model according to the interpretation request, the model parameters comprising respective features in the logistic regression model and weight values of the respective features;
an aggregating unit configured to aggregate the respective features in the acquired model parameters by feature names to which the respective features belong;
a statistical unit configured to perform feature statistics for each feature name to obtain feature statistical information of respective feature names, wherein the feature statistical information indicates distribution information of weight values of respective features under a same feature name, dimension information of the respective features under the same feature name, or both the distribution information of the weight values of the respective features under the same feature name and the dimension information of the respective features under the same feature name;
a displaying unit configured to display the respective feature names and the corresponding feature statistical information through a graphical interface.
